# EUROPEAN PATENT APPLICATION

(11) **EP 0 615 376 A2**
(43) Date of publication of application: **14.09.1994**
(21) Application number: 94301585.9
(22) Date of filing: 07.03.1994
(51) Int. Cl.: H04N 1/04

(54) **Image reading apparatus**

(30) Priority: 10.03.1993 JP 49281/93
(71) Applicant: KONICA CORPORATION, Tokyo 160 (JP)
(72) Inventor: Yamamoto, Hiroyuki, Hachioji-shi, Tokyo (JP); Izawa, Tadashi, Hachioji-shi, Tokyo (JP)
(74) Representative: Wood, Anthony Charles

(57) **Abstract**

In an image reading apparatus, an image pickup element is inputted a second driving pulse during a waiting period for waiting a next reading opertion, the pulse frequency of the secong driving pulse is lower than that of a first driving pulse which is inputted to the image pickup element during a reading period.

## Description

### BACKGROUND OF THE INVENTION

The present invention relates to an image reading apparatus, and more particularly relates to improvements in control technique for controlling heat generation of a document image reading apparatus.

A conventional digital type copier is well known as disclosed in Japanese Patent Publication Open to Public Inspection No. 157070/1987, in which images are formed in the following manner:
The surface of a document is optically scanned, and the obtained optical image is received by a solid state image pickup element such as a CCD so that the optical image is converted into an electric signal. Further, this electric signal is digitalized so that a digital signal can be provided. In accordance with the digital signal, which supplies information of the document image, a laser beam is modulated, and then an electrostatic latent image is formed on the surface of a photoreceptor by the modulated laser beam.

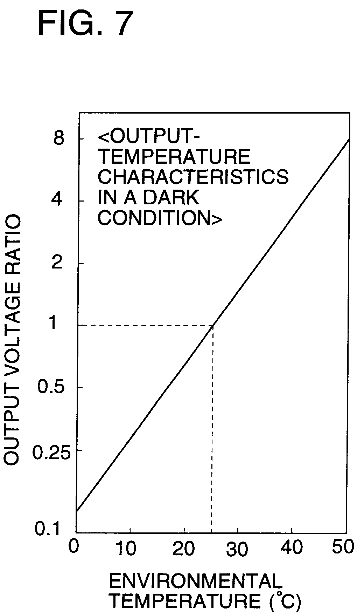

However, in the case of a solid state image pickup element used for reading images in the digital type copier, a dark current which deteriorates image quality is generally increased in proportion to the environmental temperature as shown in Fig. 7. For this reason, it is necessary to stabilize the temperature inside the apparatus.

In order to stabilize the temperature inside the apparatus, in general, a fan is operated at all times so that the inside of the apparatus is forcibly ventilated to radiate the heat generated in the apparatus. When the above method is employed, it is unavoidable to prevent minute dust from entering the apparatus even when a filter is installed at an air inlet of the apparatus. After the dust has entered the apparatus, it adheres to the units of an optical system such as a piece of cover glass of the solid state image pickup element and mirrors for guiding the optical image to the solid state image pickup element. As a result, the image quality is deteriorated.

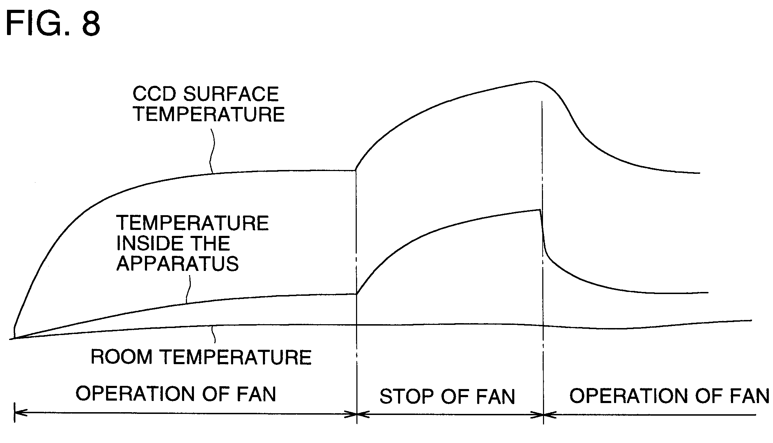

When the fan is stopped in the above apparatus in which forcible ventilation is performed for radiating the generated heat, it is possible to prevent dust from entering the apparatus. However, unless the generation of heat is suppressed in the apparatus, the temperature inside the apparatus is raised as illustrated in Fig. 8, which results in the deterioration of image quality.

In order to suppress the generation of heat inside the apparatus, a technique is disclosed in Japanese Patent Publication Open to Public Inspection No. 50670/1989, in which the generation of drive pulses of the solid state image pickup element is stopped in a period of time in which the reading operation is not conducted, that is, in a period of time in which the apparatus is waiting for the next reading operation.

That is, the disclosed technique can be summarized as follows:
Even when the power source is turned on, in the case where the generation of drive pulse signals is stopped in a period of time in which the reading operation is not conducted, the generation of heat from the solid state image pickup element and its peripheral circuits can be greatly reduced since the substantial image reading time is short. Therefore, the increase of temperature inside the apparatus can be suppressed.

### SUMMERY OF THE INVENTION

However, when the generation of drive pulse signals is stopped in a period of time in which the reading operation is not carried out, the temperature of the solid state image pickup element is suddenly lowered after the completion of the reading operation, that is, the temperature of the solid state image pickup element is greatly fluctuated. As a result, the thermal stability can not be provided, and the image quality is deteriorated.

In view of the above problems, the present invention has been achieved. It is an object of the present invention to provide an image reading apparatus in which the generation of heat from the solid state image pickup element and its peripheral circuits is suppressed as low as possible so that the necessity of forcible ventilation can be reduced and the thermal condition of the solid state image pickup element can be stabilized.

Therefore, the present invention is to provide an image reading apparatus in which a document image is read by a solid state image pickup element, and the image reading apparatus comprises: a drive pulse signal generating means for generating drive pulse signals to drive the solid state image pickup element; and a drive speed switching means for switching the frequency of drive pulse signals generated by the drive pulse signal generating means, between a period of reading operation and a period of waiting for the next reading operation.

According to the above construction, the frequency of a drive pulse signal is switched between a period of reading operation and a period of waiting for the next reading operation. Therefore, while the solid state image pickup element is driven at a predetermined reading frequency in the period of reading operation, and while heat generation is suppressed in the period of waiting for the next reading operation, the solid state image pickup element can be driven at a relatively low frequency without causing a large temperature difference.

In the case where the generation of the drive pulse signal is stopped in the period of waiting for the next reading operation, a large difference is caused in the temperature of the solid state image pickup element between the reading period and the waiting period, so that the thermal stability is deteriorated. In the case where drive pulse signals of high frequency for reading are generated at all times irrespective of the reading condition, a large amount of heat is generated by the solid state image pickup element and its peripheral circuit, so that the temperature is raised. In order to solve the above problems, in the waiting time, the solid state image image pickup element is driven at a relatively low speed so that the occurrence of temperature difference exceeding the allowable range can be avoided, and further the generation of heat can be avoided in the period of waiting for the next reading operation.

### BRIEF DESCRIPTION OF THE DRAWINGS

Fig. 1 is a block diagram for showing the circuit of the example of the image reading apparatus of the present invention.

Fig. 2 is a time chart showing the frequency switching operation in the above example.

Fig. 3 is a circuit diagram showing an example of the CCD and its peripheral circuit.

Fig. 4 is a circuit diagram showing an example of the CCD line sensor.

Fig. 5 is a time chart showing an example of the operation of the CCD.

Fig. 6 is a diagram showing the correlation between the drive frequency of the CCD and the temperature.

Fig. 7 is a diagram showing the correlation between the peripheral temperature of the CCD and the dark current.

Fig. 8 is a time chart showing a change in the temperature inside the apparatus when the fan is operated.

### DETAILED DESCRIPTION OF THE PREFERRED EMBODIMENT

An example of the present invention will be explained as follow.

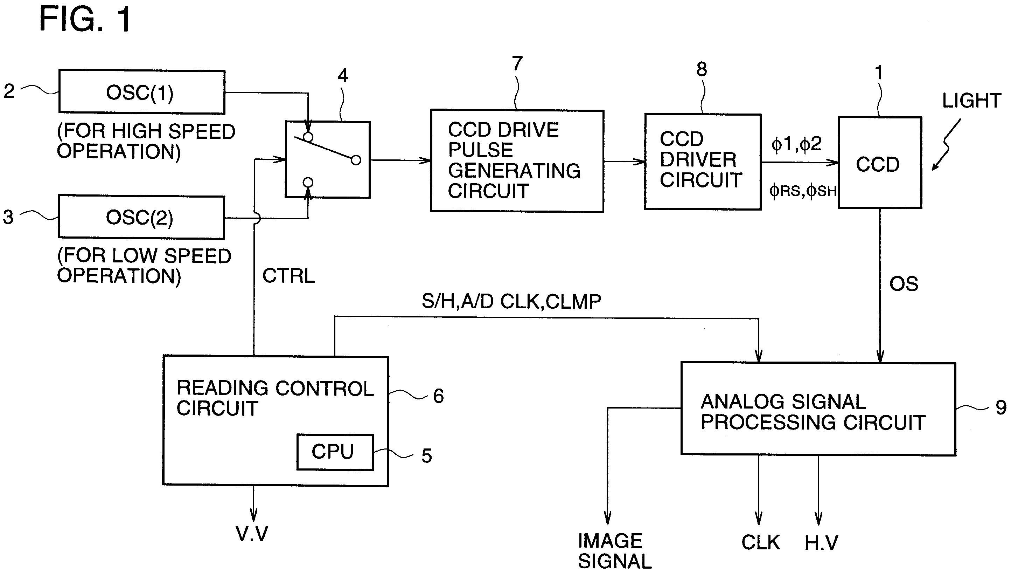

Fig. 1 is a block diagram for showing the circuit of the example of the image reading apparatus to which the present invention is applied. For example, the circuit shown in this block diagram is assembled to the reading section of a digital type copier. In the copier, a document is exposed to a beam of light. Then the beam of light having image information is received by the CCD line sensor 1 illustrated in Fig. 1. In this way, the image on the document is read out by the action of photoelectric conversion.

In the circuit shown in Fig. 1, the first and second oscillators 2, 3 are provided, the oscillating frequencies of which are different. The first oscillator 2 generates clock pulses, the frequency of which is appropriate for the predetermined reading operation conducted by the CCD sensor 1. The second oscillator 3 generates clock pulses, the frequency of which lower than that of the first oscillator 2.

The clock pulses generated by the first and second oscillators 2, 3 are respectively inputted into the switching circuit 4. Then the switching circuit 4 selectively outputs one of the clock pulses in accordance with the clock designation signal CTRL sent from the reading control circuit 6 having the CPU 5.

The clock pulse outputted from the switching circuit 4 is inputted into the CCD drive pulse generation circuit 7 which is a drive pulse signal generating means. In the CCD drive pulse generation circuit 7, a drive pulse signal for driving the CCD line sensor 1 is generated in accordance with the inputted clock pulse.

Accordingly, in the case where the oscillating clock pulse on the side of the first oscillator 2 is inputted into the CCD drive pulse generation circuit 7 by the action of the switching circuit 4, a drive pulse of the frequency for normal reading is generated. In the case where the oscillating clock pulse on the side of the second oscillator 3 is inputted into the CCD drive pulse generation circuit 7 by the action of the switching circuit 4, a drive pulse signal of a lower frequency is generated by the CCD drive pulse generation circuit 7.

As described above, the clock pulse to be inputted into the CCD drive pulse generation circuit 7 is changed over by the switching circuit 4 and the image reading control circuit 6. Therefore, the switching circuit 4 and the image reading control circuit 6 correspond to the drive speed switching means in this example.

The drive pulse signal generated by the CCD drive pulse generation circuit 7 is given to the CCD driver circuit 8. In the CCD driver circuit 8, the transfer clock pulses φ1, φ2, shift signal φ_{SH}, and reset signal φ_{RS} are formed in accordance with the aforementioned drive pulse signal, and these pulse signals are impressed upon the CCD line sensor 1, so that the CCD line sensor 1 can be operated.

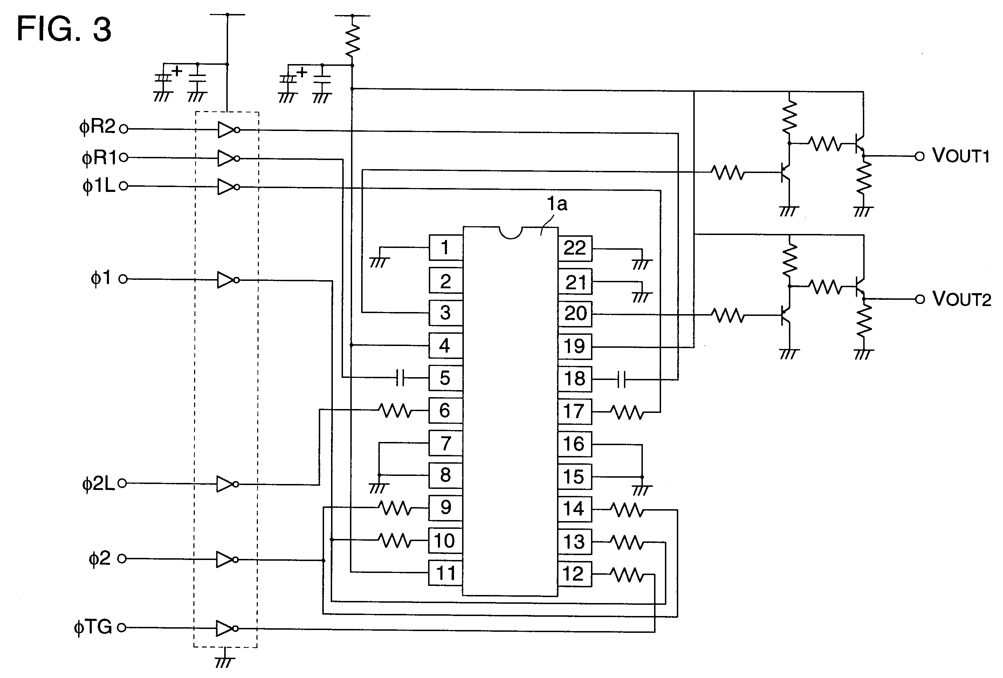

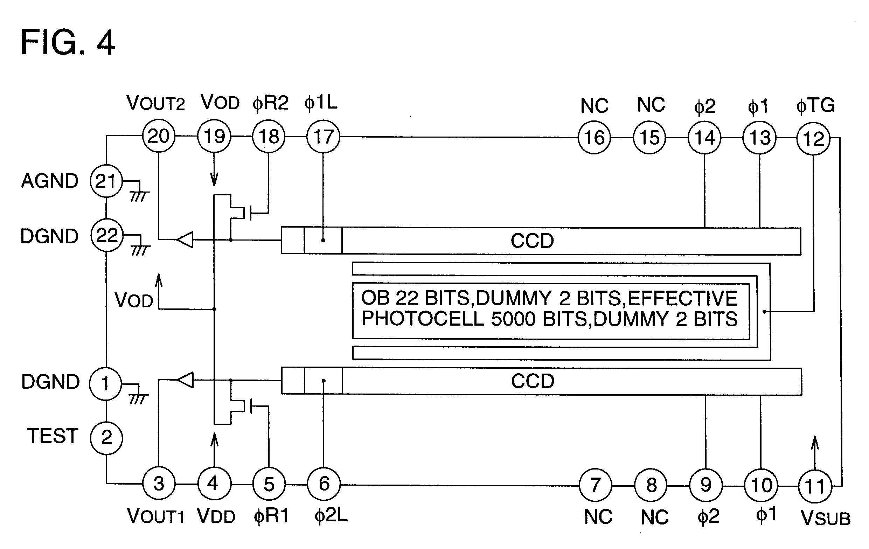

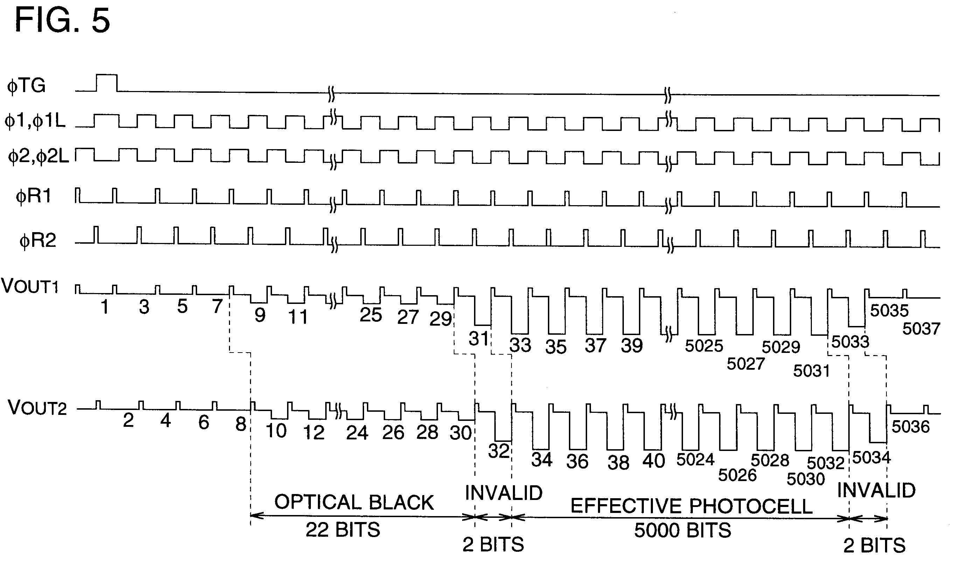

As illustrated in Fig. 3, the CCD sensor includes a package la of the CCD line sensor, and various peripheral circuits. The construction of the sensor package la is shown in Fig. 4. The sensor package la is operated by a timed relation shown in the time chart of Fig. 5 in accordance with the pulse signals of the transfer clock pulses φ1, φ2, shift signal φ_{SH}, and reset signal φ_{RS}. Then the output OS of the CCD line sensor 1 is sent to the analog signal processing circuit 9.

In accordance with the sample holding signal S/H and the A/D conversion clock pulse A/DC given by the reading control circuit 6, the analog signal processing circuit 9 converts an analog signal sent from the CCD line sensor 1 into a digital signal. This digital signal is outputted to an image processing section (not shown) together with the pixel clock signal CLK and the horizontal synchronization signal H·V.

In the image processing section, the digital image signal is subjected to various image processing such as magnification processing, reduction processing and spatial frequency processing. Also, in the image processing section, according to the digital image signal subjected to image processing, for example, a laser beam is modulated, and the modulated laser beam is irradiated on the photoreceptor drum, so that an electrostatic latent image id formed on the surface of the photoreceptor drum. The electrostatic latent image is developed with toner, and then the developed toner image is transferred and fixed on a recording sheet. In this way, the document is copied.

In this connection, the vertical synchronization signal V·V is outputted from the reading control circuit 6. In accordance with the vertical synchronization signal V·V, the movement of the optical reading system is controlled in the subsidiary scanning direction.

In this connection, in the image reading apparatus described above, a dark current in the CCD which is a solid state image pickup element used for the CCD line sensor 1, is increased in proportion to the environmental temperature (shown in Fig. 7). In this case, the dark current can be the cause of image deterioration. Therefore, it is necessary to suppress the increase in the environmental temperature.

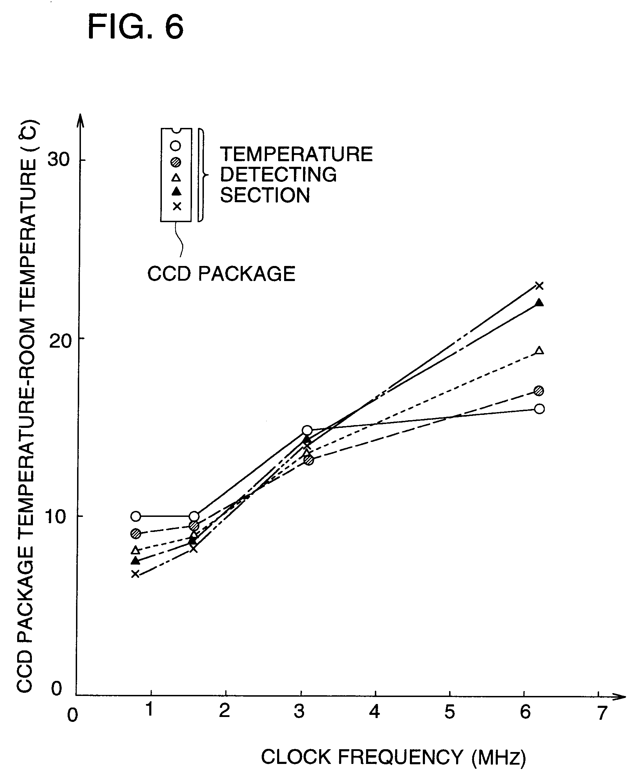

As illustrated in Fig. 6, the higher the frequency of the drive clock pulse is and the higher the drive speed is, the higher the temperature is raised. In order to ensure the reading function, it is necessary to drive the CCD at a relatively high frequency during the reading operation. For this reason, it is impossible to avoid the generation of heat from the CCD and its peripheral circuits during the reading operation. However, in general, even when the power source is turned on, the substantial reading time is short. Accordingly, when the generation of heat in the period of waiting for the next reading operation is suppressed, the increase in the environmental temperature (the temperature inside the apparatus) can be avoided.

In this case, when the generation of the drive pulse signal is stopped in the period of waiting for the next reading operation so that the CCD can not be driven, the generation of heat can be avoided in the period of waiting. However, when the CCD is stopped, the temperature of the CCD is suddenly lowered, that is, the temperature of the CCD is suddenly changed. Due to the change in temperature, the output characteristics of the CCD are changed, and the image quality is affected.

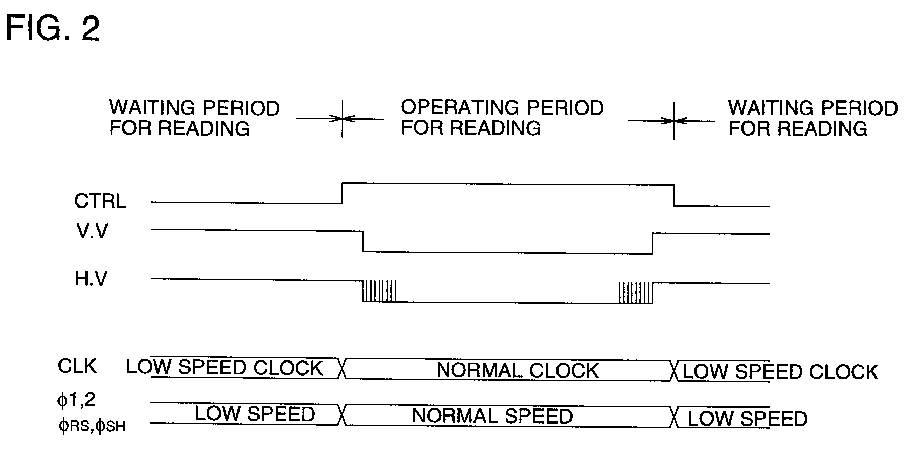

In order to solve the above problems, in this example, the following measures are taken:
As illustrated in the time chart of Fig. 2, when the switching circuit 4 is controlled by the reading control circuit 6, a normal clock pulse of the first oscillator 2 is selected during the period of reading operation, and a clock pulse of relatively low frequency of the second oscillator 3 is selected during the period of waiting for the next reading operation. When a drive pulse signal of relatively high frequency is generated in the period of reading, the CCD is driven at high speed so that reading can be carried out in the predetermined manner. In the period of waiting for the next operation of reading, a pulse signal of frequency lower than that of the period of reading is generated, so that the CCD is driven at low speed.

Although the CCD is driven even in the period of waiting for the next reading operation, the drive frequency is lowered as compared with that of the reading operation. Due to the foregoing, the generation of heat of the CCD and its peripheral circuits can be suppressed in the waiting condition. Further, when the generation of heat is appropriately permitted, a large difference of temperature is not caused between the waiting and reading conditions.

Therefore, according to the present example, the generation of heat from the CCD and its peripheral circuits is suppressed during a long period of waiting for the next reading operation. Due to the foregoing, the necessity of forcible ventilation conducted by a fan can be reduced. When the necessity of forcible ventilation conducted by a fan is reduced, the possibility of deterioration of image quality caused by dust can be decreased. When the CCD is driven at low speed even in the case of waiting, the sudden drop of CCD temperature can be avoided. As a result of the foregoing, the CCD temperature can be stabilized, so that the CCD output characteristics can be made constant.

The oscillating clock pulse of the second oscillator 2 is used for controlling the heat generation in the period of waiting for the next reading operation as described above. Accordingly, the oscillating clock pulse of the second oscillator 2 may be appropriately determined so that the temperature rise can be prevented, while consideration is given to the characteristics of the CCD to be used and the environment by which the apparatus is surrounded.

In the example described above, two oscillators are provided, the oscillating frequencies of which are different. However, it is possible to adopt the following construction: Only one oscillator may be provided, and the oscillating clock pulse of this oscillator may be subjected to frequency dividing so that the drive pulse signals of different frequencies can be formed. In other words, a means for providing a drive pulse signal for normal reading operation and a means for providing a drive pulse signal of low frequency for waiting are not limited to the above specific example.

As explained above, according to the image reading apparatus of the present invention, the solid state image pickup element can be driven at a lower speed in the waiting period than that in the reading operation period. Due to the foregoing, the generation of heat by the solid state image pickup element and its peripheral circuit can be suppressed in the period of waiting for the next reading operation, so that the temperature rise in the apparatus can be avoided.
Further, the solid state image pickup element is driven at low speed in the waiting period so that the generation of heat can be appropriately conducted for stabilizing the temperature of the solid state image pickup element. Consequently, while the necessity of radiation conducted by the fan is lowered, the temperature of the solid state image pickup element can be stabilized. As a result, the output characteristics of the solid state image pickup element can be maintained in a good condition, and the quality of images can be improved when they are read.

## Claims

1. An image reading apparatus having a reading period for reading an image and a waiting period for waiting for a next reading operation, comprising:
an image pickup element to read an image in synchronization with a driving pulse;
a driving pulse generator for generating at least a first driving pulse having a first pulse frequency and a second driving pulse having a second pulse frequency lower than the first pulse frequency and for outputting one of the first and second driving pulses to the image pickup element; and
a controller to control the driving pulse generator in such a manner that the first driving pulse is outputted to the image pickup element during the reading period and the second driving pulse is outputted to the image pickup element during the waiting period.

2. The image reading apparatus of claim 1, wherein the driving pulse generator includes a first clock generator to generate a first clock pulse corresponding to the fist pulse frequency, a second clock generator to generate a second clock pulse corresponding to the second pulse frequency, and a switch to select one of the first and second clock generators.

3. The image reading apparatus of claim 2, wherein the controller outputs a control signal to the switch.

4. The image reading apparatus of claim 1, wherein the driving pulse generator includes a frequency divider to divide a driving pulse so as to generate the first and second driving pulses.
